# EUROPÄISCHE PATENTSCHRIFT

(11) **EP 4 056 758 B1**
(45) Veröffentlichungstag und Bekanntmachung des Hinweises auf die Patenterteilung: **13.09.2023**
(21) Anmeldenummer: 21161843.4
(22) Anmeldetag: 10.03.2021
(51) Int. Cl.: E01C 19/00, E01C 19/48, E01C 23/01, E01C 23/088, G05D 1/02, G01B 21/00, G01S 19/00, H04W 4/46, G05D 1/00, G01B 11/245

(54) **VERFAHREN ZUM FERTIGEN EINES STRASSENBELAGS UND ASPHALTIERSYSTEM**
METHOD FOR MANUFACTURING A ROAD PAVING AND ASPHALTING SYSTEM
PROCÉDÉ DE FABRICATION D'UN REVÊTEMENT ROUTIER ET SYSTÈME D'ASPHALTAGE

(43) Veröffentlichungstag der Anmeldung: 14.09.2022
(73) Patentinhaber: Joseph Vögele AG, 67067 Ludwigshafen (DE)
(72) Erfinder: BUSCHMANN, Martin, 67435 Neustadt (DE); WEISER, Ralf, 68526 Ladenburg (DE); NOLL, Tobias, 76835 Roschbach (DE)
(74) Vertreter: Grünecker Patent- und Rechtsanwälte PartG mbB

(56) Entgegenhaltungen:
- DE-A1-102019 120 060

## Beschreibung

Die vorliegende Erfindung betrifft ein Verfahren zum Fertigen eines Straßenbelags sowie ein Asphaltiersystem.

Zum Einbau, insbesondere zum Erneuern, eines Straßenbelags sind mehrere aufeinander abgestimmte Schritte nötig, wobei mehrere Baumaschinen verwendet werden. So wird mittels einer Fräse ein alter Straßenbelag entfernt und mittels eines Straßenfertigers ein neuer Straßenbelag eingebaut. Es können weiterhin eine Walze zur Nachverdichtung des neuen Straßenbelags und ein Beschickerfahrzeug zum Beladen des Straßenfertigers zum Einsatz kommen. Unter Straßenbelag sind alle Beläge, vorzugsweise basierend auf bitumenhaltigem oder Betonmaterial, zu verstehen, welche durch einen Straßenfertiger hergestellt werden können, also beispielsweise Fahrbahnen, Radwege, Gehsteige, Parkplätze etc. Der Bau neuer Straßenbeläge wird zunehmend unterstützt durch digitale Planungsdaten, wobei zur Steigerung von Qualität und Effizienz eine Abstimmung der einzelnen Fertigungsschritte und der einzelnen Baumaschinen basierend auf dem Austausch von Daten erfolgen soll. So ist beispielsweise aus der US 10,563,362 B2 bekannt, dass ein Straßenfertiger auf Basis von Fahrwegsinformationen einer Kaltfräse gesteuert werden kann. Aus der DE 10 2019 120 060 A1 ist das Erzeugen einer Arbeitsstellenkarte für eine Kaltfräse bekannt, basierend auf Sensorinformationen einer autonomen mobilen Maschine.

Die bekannten digitalen Systeme zur Unterstützung des Einbaubetriebs eines Straßenbelags richten sich auf bestimmte Teilaspekte und erzeugen, tauschen aus oder verwenden nur einen begrenzten Umfang an digitalen Daten.

Aufgabe der vorliegenden Erfindung ist es, ein Verfahren und ein System zum Fertigen eines Straßenbelags bereitzustellen, bei welchem digitale Daten erzeugt und verarbeitet werden, um die Einbauqualität und Betriebseffizienz zu verbessern.

Gelöst wird die Aufgabe durch ein Verfahren gemäß Anspruch 1 bzw. durch ein Asphaltiersystem gemäß Anspruch 13.

Vorteilhafte Weiterbildungen der Erfindung sind in den Unteransprüchen angegeben.

Ein erfindungsgemäßes Verfahren zum Fertigen eines Straßenbelags, insbesondere Erneuern eines Straßenbelags, umfasst folgende Verfahrensschritte:
- Räumliches Vermessen einer Bestandsfahrbahn mittels eines Sensors,
- Erstellen eines digitalen Soll-Fräsprofils eines zu fräsenden Planums,
- Erstellen eines digitalen Soll-Höhenprofils eines einzubauenden Straßenbelags sowie Berechnen einer Schichtstärke auf Basis des Soll-Fräsprofils und des Soll-Höhenprofils,
- wenigstens teilautomatisiertes Steuern einer Fräse zum Fräsen eines Ist-Fräsprofils gemäß Vorgabe des Soll-Fräsprofils,
- räumliches Vermessen des gefrästen Ist-Fräsprofils (Planum),
- wenigstens teilautomatisiertes Steuern eines Straßenfertigers, zum Einbauen des Straßenbelags gemäß Vorgabe des Soll-Höhenprofils.

Die Verfahrensschritte sind dazu geeignet, in der hier dargestellten Reihenfolge ausgeführt zu werden.

Das räumliche Vermessen der Bestandsfahrbahn oder des Ist-Fräsprofils (Planums) kann stattfinden, indem ein Scanfahrzeug, welches mit einem oder mehreren geeigneten Messgeräten bzw. Sensoren ausgestattet ist, den relevanten Baustellenbereich befährt, wobei die Sensoren die Daten erfassen, die jeweiligen Oberflächen also beispielsweise gescannt werden. Dies kann durch Lasermesstechnik, Ultraschalltechnik, Infrarottechnik, optischer Technik im sichtbaren Wellenlängenbereich oder dergleichen erfolgen. Zusätzlich oder alternativ können die weiter unten beschriebenen Ausführungsformen des Verfahrens, insbesondere jene, bei welchen die Sensoren an Fräse und/oder Straßenfertiger angeordnet sind, zum Einsatz kommen. Das Vermessen kann jedoch auch durch ein von einem Bediener getragenes oder gezogenes Gerät erfolgen. Ebenso kann ein stationäres Messgerät einen Abschnitt der zu bearbeitenden Fläche, beispielsweise mit einer schwenkbaren Optik, scannen. Ebenso ist eine Vermessung aus der Luft mittels Flugdrohne denkbar. Das räumliche Vermessen umfasst z.B. die Erstellung eines Datensatzes mit X-, Y- und Z-Koordinaten, also Position und/oder Ausdehnung von Strukturen in einer X-Y-Ebene, sowie Höheninformationen in Z-Richtung. Insbesondere kann die X-Y-Ortskoordinate eines jeden Messpunkts erfasst werden und mit einer gemessenen Höheninformation verknüpft werden. Die Erfassung der Ortskoordinate kann durch den Empfang eines GNSS-Signals (Globales Navigations-Satelliten-System) oder durch erdbasierte Referenzpunkte erfolgen. Es können also Ausdehnung, Abmessung und Höhenstruktur einer Bestandsfahrbahn oder eines Ist-Fräsprofils als miteinander verknüpfte Daten erfasst werden. Gleiches gilt auch für eine räumliche Vermessung eines neu eingebauten Straßenbelags, wie weiter unten beschrieben.

Das Erstellen eines digitalen Soll-Fräsprofils oder eines Soll-Höhenprofils kann unter Berücksichtigung der gemessenen Daten erfolgen. Diese Planungsdaten können automatisch und/oder durch Nutzereingaben an und mit einer entsprechend geeigneten Datenverarbeitungseinheit generiert werden. Der Datensatz kann zudem die nötigen Maschinenparameter bzw. -einstellungen umfassen. Idealerweise umfasst das Soll-Fräsprofil sowie das Soll-Höhenprofil jeweils die Ortskoordinaten X, Y und einen Höhenwert Z pro Datenpunkt bzw. Ortskoordinatenpunkt, genauso wie der Datensatz der vermessenen Bestandsfahrbahn oder der Datensatz des vermessenen Ist-Fräsprofils. Die jeweiligen berechneten oder gemessenen Profile können also die Information zur räumlichen Ausdehnung in X-, Y- und Z-Richtung umfassen.

Das wenigstens teilautomatisierte Steuern von Fräse oder Straßenfertiger kann das Steuern aller oder nur einiger Funktionen der jeweiligen Maschine durch eine elektronische Datenverarbeitungseinheit umfassen. Ein Bediener kann auf einem Bedienstand oder einer anderen geeigneten Position auf oder an der Baumaschine vorhanden sein, um den Betrieb der Maschine zu überwachen und nötigenfalls korrigierend einzugreifen, oder um generell ein oder mehrere Funktionen, welche nicht automatisch gesteuert werden, zu bedienen. Dazu können ein oder mehrere Anzeigeelemente, Bedienpanels, Fernbedienungen und dergleichen vorhanden sein.

Bevorzugt wird ein Bedarf an Einbaumaterial auf Basis des Soll-Fräsprofils und des Soll-Höhenprofils berechnet. Dies kann zweckmäßig direkt nach dem Erstellen des digitalen Soll-Höhenprofils des einzubauenden Straßenbelags und dem Berechnen der Schichtstärke erfolgen. Es kann also die Anlieferung des benötigten Materials geplant und die anfallenden Kosten berechnet werden.

Vorzugsweise umfasst das räumliche Vermessen des gefrästen Ist-Fräsprofils, also des hergestellten Planums, ein Vergleichen des Ist-Fräsprofils mit dem Soll-Fräsprofil. Dabei werden insbesondere Abweichungen in der Höhe (Z-Richtung) oder Ausdehnung (Abmessungen in X-Y-Ebene) des Ist-Fräsprofils zum Soll-Fräsprofil erfasst. Dementsprechend können dann die Planungsdaten für den neuen Straßenbelag, also insbesondere das Soll-Höhenprofil angepasst werden. Es kann also beispielsweise ein zusätzlicher Flächenbereich in X-Y-Richtung zu asphaltieren sein, falls breiter gefräst wurde, als ursprünglich geplant.

In einer vorteilhaften Variante umfasst das räumliche Vermessen des gefrästen Ist-Fräsprofils (Planum) ein Neuberechnen der Schichtstärke. Wurde also beispielsweise zu tief gefräst, so kann durch Anpassung der Schichtstärke weiterhin das ursprünglich geplante Höhenniveau des neuen Straßenbelags eingehalten werden.

In einer bevorzugten Variante umfasst das räumliche Vermessen des gefrästen Ist-Fräsprofils (Planum) ein Neuberechnen des Bedarfs an Einbaumaterial. Abweichungen sowohl in der Frästiefe als auch der Ausdehnung des gefrästen Bereichs wirken sich auf den Bedarf an Einbaumaterial aus. Es kann also durch die Korrektur der Berechnungen die Baustelle mit der exakt benötigten Menge an Einbaumaterial versorgt werden.

Bevorzugt findet das räumliche Vermessen des gefrästen Ist-Fräsprofils (Planum) mittels wenigstens eines an der Fräse angeordneten Messgeräts und zumindest teilweise während des Fräsens statt. Das Messgerät, welches einen oder mehrere der oben beschriebenen Sensoren umfassen kann oder sein kann, kann beispielsweise an einem hinteren Ende der Fräse angeordnet sein. So kann der bereits gefräste Bereich gescannt bzw. vermessen werden, während der Rotor der Fräse, welcher zweckmäßig in einem weiter vorderen Bereich angeordnet ist, noch die Bestandsfahrbahn abträgt. Das Messgerät oder ein damit verbundenes Element der Fräse kann mechanische oder elektronische Mittel aufweisen, welche die durch das Fräsen erzeugten Vibrationen zumindest teilweise für die Sensorik kompensiert. Erfolgt also das Vermessen des Ist-Fräsprofils durch die Fräse selbst, so kann das neuerliche Befahren der gefrästen Fläche mit einem Scanfahrzeug entfallen, wodurch eine erhebliche Zeitersparnis gegeben ist.

In einer Variante umfasst das Steuern des Straßenfertigers ein automatisches Lenken des Straßenfertigers in Abhängigkeit des Soll-Höhenprofils. Der Straßenfertiger wird also im Sinne eines autonomen Fahrens bewegt, wobei es denkbar ist, dass Geschwindigkeit und Fahrtrichtung von einer Datenverarbeitungseinheit kontrolliert werden. Dazu kann, wie oben erläutert, das Soll-Höhenprofil die X-, Y- und Z-Information für jeden Daten- bzw. Ortskoordinatenpunkt umfassen, so dass der Fahrweg des Straßenfertigers auf Basis dieser räumlichen Information definiert wird. Somit kann der Straßenfertiger besonders präzise gesteuert werden und ein Bediener wird von dieser Aufgabe entlastet.

Zweckmäßig umfasst das Steuern des Straßenfertigers ein automatisches Steuern von einem oder mehreren Seitenschiebern einer Einbaubohle in Abhängigkeit des Soll-Höhenprofils. Ein- und ausfahrbare Seitenschieber definieren und begrenzen die Breite des neuen Straßenbelags und können dazu äußere Leitbleche aufweisen. Ändert sich die seitliche Fahrbahngeometrie durch Ausbuchtungen oder ähnlichem, so kann automatisch die Einbaubreite angepasst werden. Dafür sind zweckmäßig alle Daten zur räumlichen Erstreckung, also insbesondere die X-, Y- und Z-Koordinaten der zu asphaltierenden Fläche, im Datensatz des Soll-Höhenprofils vorhanden.

In einer bevorzugten Variante umfasst das Steuern des Straßenfertigers ein automatisches Steuern von Nivellierzylindern und/oder wenigstens eines Verdichtungsaggregats in Abhängigkeit des Soll-Höhenprofils. An der Einbaubohle angeordnete Verdichtungsaggregate können beispielsweise Tamper, Glättblech oder Pressleiste sein. So kann auch bei unebenem Ist-Fräsprofil (Planum) ein ebener neuer Straßenbelag gefertigt werden. Dabei kann die Verdichtungsleistung angepasst werden, um eine konstante Nachverdichtungshöhe trotz unterschiedlicher Schichtstärke für alle Bereiche beim Nachverdichten durch eine Walze zu erhalten. Ebenso können so sich über die Strecke ändernde Fahrbahnprofile besonders gut gefertigt werden.

In einer zweckmäßigen Variante wird ein eingebautes Ist-Höhenprofil räumlich vermessen, insbesondere zumindest teilweise während des Einbaus und mittels wenigstens eines an dem Straßenfertiger angeordneten Messgeräts, sowie mit dem Soll-Höhenprofil verglichen. Somit kann das Einbauergebnis kontrolliert und die Qualität des Einbaus sichergestellt werden.

In einer vorteilhaften Variante werden ein oder mehrere Betriebsparameter des Straßenfertigers beim Einbau aufgezeichnet. Die aufgezeichneten Daten können mit dem Einbauergebnis verglichen werden und so zum Sicherstellen der Qualität des Einbaus herangezogen werden. Es können Modelle aufgestellt und überprüft werden, welche gewissen Betriebsparametern ein Einbauergebnis zuordnen. So kann für eine bestimmte Bohlenanstellung und/oder Fahrgeschwindigkeit und/oder Leistung der Verdichtungsaggregate eine eingebaute Schichtdicke prognostiziert werden. Für eine bestimmte Ausziehstellung der Seitenschieber und/oder einen zugehörigen Fahrweg kann die Fläche und/oder Position des gefertigten Belags prognostiziert werden. Es kann also bereits aus den Einstellungen der Maschine das Einbauergebnis abgeleitet und überprüft werden.

In einer bevorzugten Variante umfasst das Erstellen eines digitalen Soll-Fräsprofils eines zu fräsenden Planums das Erstellen eines Fahrwegs der Fräse und/oder das Erstellen eines digitalen Soll-Höhenprofils eines einzubauenden Straßenbelags umfasst das Erstellen eines Fahrwegs des Straßenfertigers. Das Erstellen der digitalen Planungsdaten kann also nicht nur statische Daten, wie beispielsweise die Information einer Höhe Z für den jeweiligen X-Y-Ortskoordinatenpunkt umfassen, sondern kann auch die Maschinenposition sowie weitere Maschinenparameter umfassen. Der Fahrweg ist idealerweise bei Flächen, welche eine seitliche Ausdehnung größer als die maximal Bohlenbreite aufweisen, derart geplant, dass die nötige Anzahl an Überfahrten minimiert ist. Die Fahrwegsplanung kann beispielsweise durch eine entsprechend programmierte Datenverarbeitungseinheit automatisch erfolgen, kann jedoch auch manuell erstellt werden.

In einer bevorzugten Variante werden die vermessenen Daten der Bestandsfahrbahn und/oder des Ist-Fräsprofils (Planum) und/oder des Ist-Höhenprofils an eine von Fräse oder Straßenfertiger separate Datenverarbeitungseinheit weitergegeben. So kann beispielsweise auf einem PC in einer Planungszentrale die Fertigung des Straßenbelags geplant und überprüft werden. Die Datenweitergabe kann mittels Funktechnologie erfolgen. Ebenso kann die Übertragung mittels Datenträger, beispielsweise USB-Speichern, erfolgen oder mittels Kabel, beispielsweise indem ein Laptop mit der Datenverarbeitungseinheit der jeweiligen Baumaschine zumindest temporär verbunden wird.

Ein erfindungsgemäßes Asphaltiersystem umfasst ein Scanfahrzeug, eine Fräse und einen Straßenfertiger, wobei jedes davon wenigstens ein GNSS-Modul zur Positionsbestimmung und eine Datenverarbeitungseinheit aufweist. Die jeweilige Datenverarbeitungseinheit der Fräse oder des Straßenfertigers ist dazu konfiguriert, die Fräse oder den Straßenfertiger jeweils positionsabhängig zu fahren. Das Scanfahrzeug weist ein Messgerät zum räumlichen Vermessen einer Bestandsfahrbahn auf. Die Fräse weist ein Messgerät zum räumlichen Vermessen eines gefrästen Ist-Fräsprofils (Planums) auf und der Straßenfertiger weist ein Messgerät zum räumlichen Vermessen eines eingebauten Ist-Höhenprofils auf. Es ist auch möglich, dass das Scanfahrzeug mittels seiner Datenverarbeitungseinheit positionsabhängig fahrbar ist. Positionsabhängig fahrbar bedeutet in diesem Zusammenhang, zumindest teilweise autonom, also computergesteuert, fahrbar zu sein. Das jeweilige Fahrzeug kann auch mehrere GNSS-Module zur Positionsbestimmung aufweisen, um beispielsweise das linke und/oder rechte äußerste seitliche Ende einer Einbaubohle zu referenzieren. Ebenso können derartige Daten durch Verknüpfung eines an der Baumaschine angeordneten GNSS-Moduls mit den Abmessungen der Baumaschine, welche veränderlich sein können, erhalten werden. So kann beispielsweise das GNSS-Modul mittig auf einem Straßenfertiger angeordnet sein und die jeweilige Auszugsbreite der Einbaubohle des Straßenfertigers kann über die Steuerung der betreffenden Motoren bzw. über geeignete Sensoren bekannt sein.

Vorzugsweise sind wenigstens zwei der Datenverarbeitungseinheiten miteinander drahtlos verbunden und/oder jeweils mit einer weiteren Datenverarbeitungseinheit, welche separat von Scanfahrzeug, Fräse oder Straßenfertiger angeordnet ist, drahtlos verbunden. So können beispielsweise an der jeweiligen Baumaschine ermittelte Daten weitergegeben werden und/oder Planungsdaten und/oder Steuerungsbefehle empfangen werden.

Im Folgenden werden Ausführungsbeispiele der Erfindung anhand der Figuren näher beschrieben. Dabei zeigen
Figur 1: eine schematische Darstellung eines Asphaltiersystems umfassend Straßenfertiger, Fräse und Scanfahrzeug,
Figur 2: eine schematische Schnittansicht eines Straßenbelags zu unterschiedlichen Fertigungsschritten,
Figur 3: eine schematische dreidimensionale Darstellung von Planungs- und Fertigungsdaten,
Figur 4: eine schematische Draufsicht auf einen Abschnitt eines zu fertigenden Straßenbelags.

Einander entsprechende Komponenten sind in den Figuren jeweils mit gleichen Bezugszeichen versehen.

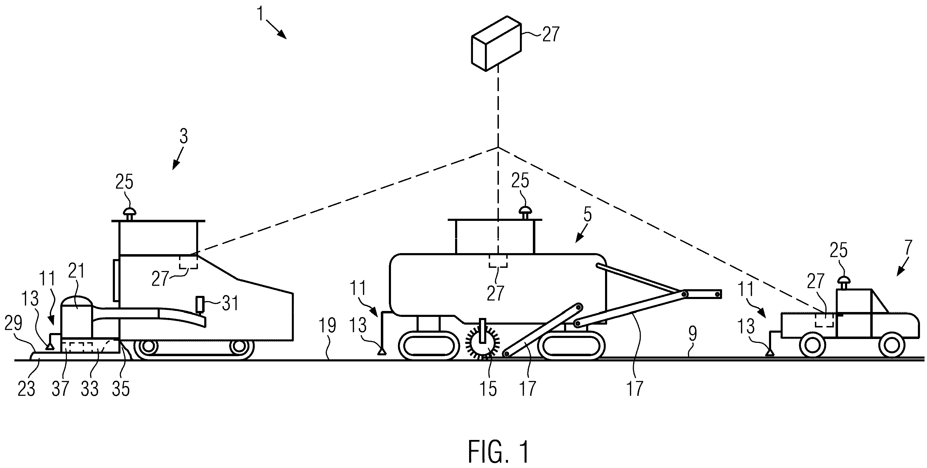

Figur 1 zeigt ein Asphaltiersystem 1 mit einem Straßenfertiger 3, einer Fräse 5 und einem Scanfahrzeug 7. Weitere Fahrzeuge, wie beispielsweise eine Walze zum Nachverdichten, ein oder mehrere Lastkraftwagen zum Abtransport einer heraus gefrästen Bestandsfahrbahn 9 sowie ein oder mehrere Lastkraftwagen zur Anlieferung von Einbaumaterial können ebenfalls Teil des Asphaltiersystems 1 sein, sind hier jedoch nicht gezeigt. Das Scanfahrzeug 7 weist ein Messgerät 11 zum räumlichen Vermessen des Bodens, über den es sich bewegt, insbesondere der Bestandsfahrbahn 9 auf. Das Messgerät 11 kann eine oder mehrere Sensoren 13, beispielsweise Lasersensoren, welche einen zuvor ausgesendeten und vom Boden reflektierten Laserstrahl detektieren, aufweisen. Die Fräse 5 weist einen oder mehrere Rotoren 15 auf, welche durch Rotation die Bestandsfahrbahn 9 heraus fräsen. Über Förderbänder 17 kann das heraus gefräste Material einem LKW übergeben werden. Der Straßenfertiger 3 befährt ein von der Fräse 5 hinterlassenes Planum bzw. Ist-Fräsprofil 19 und baut mittels einer Einbaubohle 21 einen neuen Straßenbelag 23, beispielsweise aus Asphaltmaterial oder Betonmaterial, ein. Straßenfertiger 3, Fräse 5 und Scanfahrzeug 7 weisen jeweils ein GNSS-Modul 25 zum Empfangen eines Satellitensignals zur Positionsbestimmung auf. Alternativ oder zusätzlich kann eine Positionsbestimmung durch lokale Vorrichtungen, wie beispielsweise Laserreferenzsysteme, erfolgen.

Die Fahrzeuge 3, 5, 7 weisen jeweils eine Datenverarbeitungseinheit 27 auf, wobei auch eine oder mehrere von den Fahrzeugen 3, 5, 7 separate Datenverarbeitungseinheiten 27 vorhanden sein können. Die Datenverarbeitungseinheiten 27 können Datenspeicher, Prozessor sowie Kommunikationsschnittstellen umfassen. Insbesondere können die Datenverarbeitungseinheiten 27 miteinander drahtlos verbunden sein, um Daten auszutauschen, was hier durch die gestrichelten Linien angedeutet ist. Außerdem können die Datenverarbeitungseinheiten 27 jeweils alle das jeweilige Fahrzeug 3, 5, 7 betreffende Daten verarbeiten, beispielsweise auch die mit dem GNSS-Modul 25 empfangenen Satellitensignale, so dass die GNSS-Module 25 im Wesentlichen lediglich als Antennen fungieren. Die Fräse 5 und der Straßenfertiger 3 weisen ebenfalls jeweils wenigstens ein Messgerät 11 zum räumlichen Vermessen eines gefrästen Planums (Ist-Fräsprofil) 19 bzw. eines eingebauten Ist-Höhenprofils 29 auf. Die Messgeräte 11 können von gleicher oder unterschiedlicher Bauart und Funktionsweise sein.

Der Straßenfertiger 3 weist an seiner linken und rechten Seite jeweils einen Nivellierzylinder 31 auf, mit welchem die Zugpunkthöhe der Einbaubohle 21 eingestellt wird. Die Einbaubohle 21 weist an ihrer linken und/oder rechten Seite Seitenschieber 33 auf, welche die Vorlage des Einbaumaterials 35 seitlich begrenzen und somit die Einbaubreite definieren. Die Seitenschieber 33 können mittels seitlich ausfahrbaren Bohlenelementen und damit in variabler Bohlenbreite angeordnet sein und im Wesentlichen durch ein vertikales Blech das Einbaumaterial 35 auf einer gewünschten Breite halten. Die Einbaubohle 21 weist ein oder mehrere Verdichtungsaggregate 37, wie Tamper, Glättblech oder Pressleiste auf, um das Einbaumaterial 35 mit der gewünschten Verdichtung einzubauen.

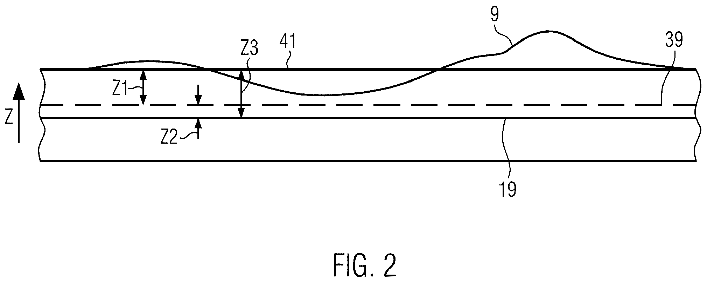

Figur 2 zeigt eine schematische Schnittansicht zur Darstellung der Höhe in Z-Richtung eines Straßenbelags zu unterschiedlichen Fertigungsschritten. Eine Bestandsfahrbahn 9 weist in diesem Beispiel Unebenheiten, wie beispielsweise Spurrillen, auf und ist zur Erneuerung vorgesehen und wird zunächst räumlich vermessen. Anschließend wird das digitale Soll-Fräsprofil 39 (gestrichelte Linie) erstellt, also beispielsweise an einem PC von einem Bediener geplant oder automatisch mittels einer geeigneten Software erstellt. Dann wird das digitale Soll-Höhenprofil 41 des neuen Straßenbelags digital erstellt, also geplant. Das Soll-Höhenprofil 41 gibt also die Fahrbahnhöhe, inklusive möglicherweise gewünschten Neigungen, Dachprofilen oder ähnlichem, an. Es ist somit die Schichtstärke Z1 des neuen Straßenbelags und damit die benötigte Menge an Einbaumaterial 35 bekannt. Das tatsächliche mittels der Fräse 5 gefräste Ist-Fräsprofil 19, also das Planum, kann wie hier gezeigt von der vorgesehenen Höhe des Soll-Fräsprofil 39 abweichen, beispielsweise niedriger sein, da mehr Material heraus gefräst wurde. Um die Information zur tatsächlichen Höhe und auch der räumlichen Ausdehnung in Breite und Länge (X-Y-Richtung) des gefrästen Ist-Fräsprofils 19 zu erhalten, wird dieses räumlich vermessen. Das Ist-Fräsprofil 19 kann mit dem Soll-Fräsprofil 39 verglichen und Abweichungen Z2 der Schichtstärke festgestellt werden. Auf Basis des vermessenen Ist-Fräsprofils 19 kann die tatsächlich benötigte Schichtstärke Z3 (= Z1 + Z2) ermittelt werden, um die gewünschte Einbauhöhe des Soll-Höhenprofils 41 zu erreichen.

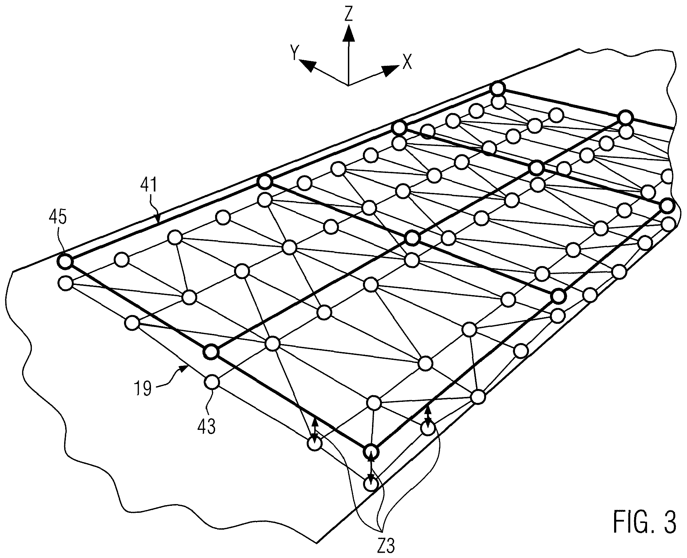

Figur 3 zeigt eine schematische dreidimensionale Darstellung von Planungs- und Fertigungsdaten. Als unteres Gitternetz sind die Datenpunkte des hergestellten Ist-Fräsprofils 19, also des Planums, dargestellt. Sinnvollerweise entsprechen die Datenpunkte 43 des Ist-Fräsprofils 19 einer Auflösung der Messsysteme, also GNSS-Messung bzw. Fahrbahnscan. Das obere Gitternetz stellt die Datenpunkte 45 des Soll-Höhenprofils 41, also die digitalen Planungsdaten der einzubauenden Schicht dar. Die Anzahl der Datenpunkte 43, 45 der beiden Profile 19, 41 kann unterschiedlich sein. Die Daten umfassen die Erstreckung des Bauwerks in X-Y-Richtung sowie die Höhendaten in Z-Richtung. Wie zu erkennen, kann das gefräste Planum 19 Unebenheiten aufweisen, so dass die Höhe Z3, also der Abstand zum Soll-Höhenprofil 41, veränderlich in Abhängigkeit der X-Y-Koordinate ist.

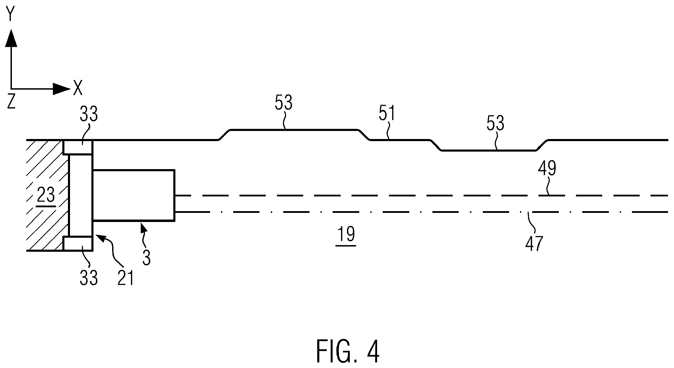

Figur 4 zeigt eine schematische Draufsicht auf einen Abschnitt eines zu fertigenden Straßenbelags. Eine Fräse 5 hat bereits das Ist-Fräsprofil bzw. Planum 19 durch Befahren ihres Fahrwegs 47 hergestellt. Der Straßenfertiger 3 folgt nun dem für ihn geplanten Fahrweg 49, welcher, wie hier gezeigt, unterschiedlich des Fahrwegs 47 der Fräse 5 jedoch auch gleich diesem sein kann. Die seitliche Begrenzung 51 der Fahrbahn kann Ausbuchtungen 53 nach innen oder außen aufweisen. Beim Einbauen des neuen Straßenbelags 23 kann deshalb der Straßenfertiger 3 so gesteuert werden, dass die Seitenschieber 33 der Einbaubohle 21 und damit deren Einbaubreite der veränderlichen Fahrbahnbreite automatisch angepasst werden. Insbesondere kann der Seitenschieber 33 einer Seite der Einbaubohle 21 jeweils unabhängig von dem der anderen Seite gesteuert werden. Bei der Planung des Fahrwegs 49 werden die maximalen und minimalen möglichen Breiten der Einbaubohle 21 und die veränderliche Fahrbahnbreite berücksichtigt. Dabei wird bei zu fertigenden Flächen, welche breiter als die maximale Breite der Einbaubohle 21 sind, der Fahrweg 49 des Straßenfertigers 3 oder von mehreren Straßenfertigern 3 so geplant, dass die Anzahl an Überfahrten minimiert ist.

Ausgehend von den oben dargestellten Ausführungsformen eines Verfahrens zum Fertigen eines Straßenbelags sind vielerlei Variationen desselben möglich. Es können alle oder einige der Fahrzeuge 3, 5, 7 teilweise oder vollständig automatisiert, also computergesteuert, gefahren und betrieben werden. Ebenso können weitere Fahrzeuge wie Walze oder Beschicker wenigstens teilweise automatisiert, insbesondere autonom, betrieben werden.

## Patentansprüche

1. Verfahren zum Fertigen eines Straßenbelags (23), insbesondere Erneuern eines Straßenbelags, umfassend:
räumliches Vermessen einer Bestandsfahrbahn (9) mittels eines Sensors (13);
Erstellen eines digitalen Soll-Fräsprofils (39);
Erstellen eines digitalen Soll-Höhenprofils (41) eines einzubauenden Straßenbelags (23) sowie Berechnen einer Schichtstärke (Z1) auf Basis des Soll-Fräsprofils (39) und des Soll-Höhenprofils (41);
wenigstens teilautomatisiertes Steuern einer Fräse (5) zum Fräsen eines Ist-Fräsprofils (19) gemäß Vorgabe des Soll-Fräsprofils (39);
räumliches Vermessen des gefrästen Ist-Fräsprofils (19);
wenigstens teilautomatisiertes Steuern eines Straßenfertigers (3), zum Einbauen des Straßenbelags (23) gemäß Vorgabe des Soll-Höhenprofils (41).

2. Verfahren nach Anspruch 1, **gekennzeichnet durch** Berechnen eines Bedarfs an Einbaumaterials (35) auf Basis des Soll-Fräsprofils (39) und des Soll-Höhenprofils (41).

3. Verfahren nach einem der vorangegangenen Ansprüche, **dadurch gekennzeichnet, dass** das räumliche Vermessen des gefrästen Ist-Fräsprofils (19) ein Vergleichen des Ist-Fräsprofils (19) mit dem Soll-Fräsprofil (39) umfasst.

4. Verfahren nach einem der vorangegangenen Ansprüche, **dadurch gekennzeichnet, dass** das räumliche Vermessen des gefrästen Ist-Fräsprofils (19) ein Neuberechnen der Schichtstärke (Z1) umfasst.

5. Verfahren nach einem der vorangegangenen Ansprüche, **dadurch gekennzeichnet, dass** das räumliche Vermessen des gefrästen Ist-Fräsprofils ein Neuberechnen des Bedarfs an Einbaumaterial (35) umfasst.

6. Verfahren nach einem der vorangegangenen Ansprüche, **dadurch gekennzeichnet, dass** das räumliche Vermessen des gefrästen Ist-Fräsprofils (19) mittels wenigstens eines an der Fräse (5) angeordneten Messgeräts (11) und zumindest teilweise während des Fräsens stattfindet.

7. Verfahren nach einem der vorangegangenen Ansprüche, **dadurch gekennzeichnet, dass** das Steuern des Straßenfertigers (3) ein automatisches Lenken des Straßenfertigers (3) in Abhängigkeit des Soll-Höhenprofils (41) umfasst.

8. Verfahren nach einem der vorangegangenen Ansprüche, **dadurch gekennzeichnet, dass** das Steuern des Straßenfertigers (3) ein automatisches Steuern von einem oder mehreren Seitenschiebern (33) einer Einbaubohle (21) in Abhängigkeit des Soll-Höhenprofils (41) umfasst.

9. Verfahren nach einem der vorangegangenen Ansprüche, **dadurch gekennzeichnet, dass** das Steuern des Straßenfertigers (3) ein automatisches Steuern von Nivellierzylindern (31) und/oder wenigstens eines Verdichtungsaggregats (37) in Abhängigkeit des Soll-Höhenprofils (41) umfasst.

10. Verfahren nach einem der vorangegangenen Ansprüche, **dadurch gekennzeichnet, dass** ein eingebautes Ist-Höhenprofil (29) räumlich vermessen wird, insbesondere zumindest teilweise während des Einbaus und mittels wenigstens eines an dem Straßenfertiger (3) angeordneten Messgeräts (11), sowie mit dem Soll-Höhenprofil (41) verglichen wird.

11. Verfahren nach einem der vorangegangenen Ansprüche, **dadurch gekennzeichnet, dass** das Erstellen eines digitalen Soll-Fräsprofils (39) das Erstellen eines Fahrwegs (47) der Fräse (5) umfasst und/oder dass das Erstellen eines digitalen Soll-Höhenprofils (41) eines einzubauenden Straßenbelags (23) das Erstellen eines Fahrwegs (49) des Straßenfertigers (3) umfasst.

12. Verfahren nach einem der vorangegangenen Ansprüche, **dadurch gekennzeichnet, dass** die vermessenen Daten der Bestandsfahrbahn (9) und/oder des Ist-Fräsprofils (19) und/oder des Ist-Höhenprofils (29) an eine von Fräse (5) oder Straßenfertiger (3) separate Datenverarbeitungseinheit (27) weitergegeben werden.

13. Asphaltiersystem (1) umfassend ein Scanfahrzeug (7), eine Fräse (5) und einen Stra-ßenfertiger (3), wobei jedes davon wenigstens ein GNSS-Modul (25) zur Positionsbestimmung und eine Datenverarbeitungseinheit (27) aufweist, wobei die jeweilige Datenverarbeitungseinheit (27) der Fräse (5) oder des Straßenfertigers (3) dazu konfiguriert ist, die Fräse (5) oder den Straßenfertiger (3) jeweils positionsabhängig zu fahren, und wobei das Scanfahrzeug (7) ein Messgerät (11) zum räumlichen Vermessen einer Bestandsfahrbahn (9) aufweist, **dadurch gekennzeichnet, dass** die Fräse (5) ein Messgerät (11) zum räumlichen Vermessen eines gefrästen Ist-Fräsprofils (19) aufweist und der Straßenfertiger (3) ein Messgerät (11) zum räumlichen Vermessen eines eingebauten Ist-Höhenprofils (29) aufweist.

14. Asphaltiersystem nach Anspruch 13, **dadurch gekennzeichnet, dass** wenigstens zwei der Datenverarbeitungseinheiten (27) miteinander drahtlos verbunden sind und/oder jeweils mit einer weiteren Datenverarbeitungseinheit (27), welche separat von Scanfahrzeug (7), Fräse (5) oder Straßenfertiger (3) angeordnet ist, drahtlos verbunden sind.

## Claims

1. Method of paving a road surface (23), in particular renewing a road surface, comprising:
spatial measurement of an existing road surface (9) by means of a sensor (13);
creation of a digital target milling profile (39);
creation of a digital target height profile (41) of a road surface (23) to be paved and calculation of a layer thickness (Z1) based on the target milling profile (39) and the target height profile (41);
at least partially automated control of a milling machine (5) for milling an actual milling profile (19) according to the specification of the target milling profile (39);
spatial measurement of the milled actual milling profile (19);
at least partially automated control of a road paver (3) for paving the road surface (23) in accordance with the specification of the target height profile (41).

2. Method according to claim 1, **characterized by** calculating a need for paving material (35) based on the target milling profile (39) and the target height profile (41).

3. Method according to one of the preceding claims, **characterized in that** the spatial measurement of the milled actual milling profile (19) comprises a comparison of the actual milling profile (19) with the target milling profile (39).

4. Method according to one of the preceding claims, **characterized in that** the spatial measurement of the milled actual milling profile (19) comprises a recalculation of the layer thickness (Z1).

5. Method according to one of the preceding claims, **characterized in that** the spatial measurement of the milled actual milling profile comprises a recalculation of the need for paving material (35).

6. Method according to one of the preceding claims, **characterized in that** the spatial measurement of the milled actual milling profile (19) is carried out by means of at least one measuring device (11) arranged on the milling machine (5) and at least partially during milling.

7. Method according to one of the preceding claims, **characterized in that** controlling the road paver (3) comprises automatically steering the road paver (3) depending on the target height profile (41).

8. Method according to one of the preceding claims, **characterized in that** controlling the road paver (3) comprises automatically controlling one or more sideshifts (33) of a paving screed (21) depending on the target height profile (41).

9. Method according to one of the preceding claims, **characterized in that** the control of the road paver (3) comprises an automatic control of leveling cylinders (31) and/or at least one compaction unit (37) in dependence on the target height profile (41).

10. Method according to one of the preceding claims, **characterized in that** a paved actual height profile (29) is spatially measured, in particular at least partially during paving and by means of at least one measuring device (11) arranged on the road paver (3), and compared with the target height profile (41).

11. Method according to one of the preceding claims, **characterized in that** creating a digital target milling profile (39) comprises creating a travel path (47) of the milling machine (5) and/or the creation of a digital target height profile (41) of a road surface (23) to be paved comprises the creation of a travel path (49) of the road paver (3).

12. Method according to one of the preceding claims, **characterized in that** the measured data of the existing road surface (9) and/or of the actual milling profile (19) and/or of the actual height profile (29) are passed on to a data processing unit (27) separate from the milling machine (5) or the road paver (3).

13. Asphalt paving system (1) comprising a scanning vehicle (7), a milling machine (5) and a road paver (3), each of which has at least one GNSS module (25) for position determination and a data processing unit (27), the respective data processing unit (27) of the milling machine (5) or the road paver (3) being configured to drive the milling machine (5) or the road paver (3) in each case depending on the position, and wherein the scanning vehicle (7) has a measuring device (11) for spatially measuring an existing road surface (9), **characterized in that** the milling machine (5) has a measuring device (11) for spatially measuring a milled actual milling profile (19) and the road finisher (3) has a measuring device (11) for spatially measuring a paved actual height profile (29).

14. Asphalt paving system according to claim 13, **characterized in that** at least two of the data processing units (27) are wirelessly connected to each other and/or are each wirelessly connected to a further data processing unit (27) which is arranged separately from the scanning vehicle (7), milling machine (5) or road paver (3).

## Revendications

1. Procédé de fabrication d'un revêtement routier (23), en particulier de rénovation d'un revêtement routier, comprenant les opérations suivantes :
la mesure spatiale d'une voie de circulation existante (9) au moyen d'un capteur (13) ;
l'établissement d'un profil de fraisage numérique de consigne (39) ;
l'établissement d'un profil numérique de hauteur de consigne (41) d'un revêtement routier (23) à poser ainsi que le calcul d'une épaisseur de couche (Z1) sur la base du profil de fraisage de consigne (39) et du profil de hauteur de consigne (41) ;
la commande au moins partiellement automatisée d'une fraise (5) pour fraiser un profil de fraisage réel fraisé (19) conformément à la prescription du profil de fraisage de consigne (39) ;
la mesure spatiale du profil de fraisage réel fraisé (19) ;
la commande au moins partiellement automatisée d'un finisseur de routes (3), pour la pose du revêtement routier (23) conformément à la prescription du profil de hauteur de consigne (41).

2. Procédé selon la revendication 1, **caractérisé par** le calcul d'un besoin en matériau de montage (35) sur la base du profil de fraisage de consigne (39) et du profil de hauteur de consigne (41).

3. Procédé selon l'une des revendications précédentes, **caractérisé en ce que** la mesure spatiale du profil de fraisage réel fraisé (19) comprend une comparaison du profil de fraisage réel (19) avec le profil de fraisage de consigne (39).

4. Procédé selon l'une des revendications précédentes, **caractérisé en ce que** la mesure spatiale du profil de fraisage réel fraisé (19) comprend un recalcul de l'épaisseur de couche (21).

5. Procédé selon l'une des revendications précédentes, **caractérisé en ce que** la mesure spatiale du profil de fraisage réel fraisé comprend un recalcul des besoins en matériau de montage (35).

6. Procédé selon l'une des revendications précédentes, **caractérisé en ce que** la mesure spatiale du profil de fraisage réel fraisé (19) a lieu au moyen d'au moins un appareil de mesure (11) disposé sur la fraise (5) et au moins partiellement pendant le fraisage.

7. Procédé selon l'une quelconque des revendications précédentes, **caractérisé en ce que** la commande du finisseur de routes (3) comprend un guidage automatique du finisseur de routes (3) en fonction du profil de hauteur de consigne (41).

8. Procédé selon l'une quelconque des revendications précédentes, **caractérisé en ce que** la commande du finisseur de routes (3) comprend la commande automatique d'un ou plusieurs tabliers latéraux (33) d'une table de pose (21) en fonction du profil de hauteur de consigne (41).

9. Procédé selon l'une des revendications précédentes, **caractérisé en ce que** la commande du finisseur de routes (3) comprend la commande automatique de vérins de nivellement (31) et/ou d'au moins un groupe de compactage (37) en fonction du profil de hauteur de consigne (41).

10. Procédé selon l'une des revendications précédentes, **caractérisé en ce qu'**un profil de hauteur réelle (29) mis en place est mesuré dans l'espace, en particulier au moins partiellement pendant la mise en place et au moyen d'au moins un appareil de mesure (11) disposé sur le finisseur de routes (3), et est comparé au profil de hauteur de consigne (41).

11. Procédé selon l'une des revendications précédentes, **caractérisé en ce que** l'établissement d'un profil numérique de fraisage de consigne (39) comprend l'établissement d'une trajectoire (47) de la fraiseuse (5) et/ou **en ce que** l'établissement d'un profil numérique de hauteur de consigne (41) d'un revêtement routier (23) à poser comprend l'établissement d'une trajectoire (49) du finisseur de routes (3).

12. Procédé selon l'une des revendications précédentes, **caractérisé en ce que** les données mesurées de la chaussée existante (9) et/ou du profil de fraisage réel fraisé (19) et/ou du profil de hauteur réel (29) sont transmises à une unité de traitement de données (27) séparée de la fraiseuse (5) ou du finisseur de routes (3).

13. Système d'asphaltage (1) comprenant un véhicule de balayage (7), une fraiseuse (5) et un finisseur de routes (3), chacun d'entre eux comportant au moins un module GNSS (25) pour déterminer la position et une unité de traitement de données (27), l'unité de traitement de données (27) respective de la fraiseuse (5) ou du finisseur de routes (3) étant configurée pour conduire la fraiseuse (5) ou le finisseur de routes (3) en fonction de la position respective, et le véhicule de balayage (7) présentant un appareil de mesure (11) pour mesurer dans l'espace une chaussée existante (9), **caractérisé en ce que** la fraiseuse (5) présente un appareil de mesure (11) pour mesurer dans l'espace un profil de fraisage réel fraisé (19) et le finisseur de routes (3) présente un appareil de mesure (11) pour mesurer dans l'espace un profil de hauteur réel posé (29).

14. Système d'asphaltage selon la revendication 13, **caractérisé en ce qu'**au moins deux des unités de traitement de données (27) sont reliées l'une à l'autre par une liaison sans fil et/ou sont reliées chacune sans fil à une autre unité de traitement de données (27), qui est disposée séparément du véhicule de balayage (7), de la fraiseuse (5) ou du finisseur de routes (3).
